# FASCICULE DE BREVET EUROPEEN

(11) **EP 0 493 146 B1**
(45) Date de publication et mention de la délivrance du brevet: **14.06.1995**
(21) Numéro de dépôt: 91403163.8
(22) Date de dépôt: 22.11.1991
(51) Int. Cl.: G01N 29/24, G01N 29/22

(54) **Dispositif de contrôle non destructif par ultrasons d'éléments de forme allongée à section sensiblement constante**
Vorrichtung zur zerstörungsfreien Prüfung von länglichen Elementen mit annähernd konstantem Querschnitt
Apparatus for non-destructive ultrasonic testing of elongated elements with an approximately constant section

(30) Priorité: 21.12.1990 FR 9016155
(43) Date de publication de la demande: 01.07.1992
(73) Titulaire: FRAMATOME, 92400 Courbevoie (FR)
(72) Inventeur: Moreau, Georges, La Perrinche, F-01440 Viriat (FR); Archer, Jacques, F-92290 Chatenay Malabry (FR); Bodson, Francis, F-71640 Givry (FR); Burat, Olivier, F-71100 Saint Remy (FR)
(74) Mandataire: Bouget, Lucien

(56) Documents cités:
- EP-A- 0 333 552
- GB-A- 2 208 138
- US-A- 3 693 415
- PROCEEDINGS OF THE 11TH ANNUAL INTERNATIONAL CONFERENCE OF THE IEEE, ENGINEERING IN MEDICINE & BIOLOGY SOCIETY, Seattle, Washington, 9-12 novembre 1989, vol. 11, part II, pages 435-436 ; H.-P. SCHWARZ et al. : "A New Miniaturized Ultrasonic Circular Array for 360 Scanning in Endosonography"

## Description

L'invention concerne un dispositif de contrôle non destructif par ultrasons d'éléments de forme allongée à section sensiblement constante et notamment un dispositif de contrôle de la paroi de tubes de petits ou grands diamètres et de grande longueur, et de profilés pleins ou creux, de grande longueur.

En ce qui concerne les tubes de petits diamètres, les échangeurs de chaleur tels que les générateurs de vapeur, en particulier les générateurs de vapeur utilisés dans les centrales nucléaires de production de puissance, comportent généralement un faisceau de tubes de grande longueur qui peuvent être droits, cintrés ou encore enroulés en hélice.

En particulier, dans le cas des réacteurs nucléaires refroidis par de l'eau sous pression ou par du sodium liquide, le faisceau de tubes est disposé à l'intérieur d'une enveloppe cylindrique externe à axe vertical et les tubes sont fixés, par leur partie terminale, soit sur des plaques tubulaires solidaires de l'enveloppe, soit sur des plaques tubulaires ou des collecteurs extérieurs à l'enveloppe du générateur de vapeur. Dans ce dernier cas, chaque tube comporte une fixation intermédiaire, par manchette thermique, sur l'enveloppe.

Le fluide de refroidissement du réacteur circule soit à l'intérieur des tubes du faisceau, soit à l'extérieur de ces tubes, de manière à assurer l'échauffement et la vaporisation d'eau d'alimentation à travers leur paroi.

La paroi des tubes qui constituent des tubes d'échange thermique assure donc la séparation entre un fluide de refroidissement du réacteur nucléaire et l'eau d'alimentation à vaporiser.

Dans le cas de réacteurs nucléaires refroidis par de l'eau sous pression, le fluide de refroidissement du réacteur, l'eau primaire, vient en contact, à l'intérieur de la cuve du réacteur, avec le coeur du réacteur constitué par les assemblages combustibles et se trouve donc susceptible de renfermer des produits radio-actifs. Il est donc essentiel de se placer dans des conditions telles, pendant la fabrication et l'utilisation des générateurs de vapeur, qu'on évite toute fuite du fluide de refroidissement du réacteur vers l'eau d'alimentation qui, après transformation en vapeur, va à la turbine.

De même dans le cas des réacteurs nucléaires à neutrons rapides refroidis par un métal réactif tel que le sodium liquide, il est nécessaire d'éviter toute fuite à travers la paroi des tubes d'échange se traduisant par une mise en contact d'eau ou de vapeur d'eau avec le sodium liquide et par une réaction extrêmement vive pouvant conduire à des explosions et à un endommagement au moins partiel du générateur de vapeur.

Il est donc nécessaire d'effectuer des contrôles minutieux de la paroi des tubes d'échange thermique, à différents stades de la fabrication des générateurs de vapeur et après un certain temps d'utilisation de ces générateurs de vapeur, pour s'assurer de la parfaite intégrité de la paroi de ces tubes assurant la séparation entre les fluides d'échange thermique.

Pour ce qui concerne les tubes de plus grands diamètres, le dispositif peut s'appliquer aux contrôles de la paroi et des soudures des tubes véhiculant des fluides tels que les hydrocarbures (pipe-line), des gaz, ou tout autre fluide.

De manière générale, il peut être nécessaire de contrôler l'état de la paroi de tubes lors de leur fabrication, avant ou après leur montage et lors de contrôles périodiques, par exemple après un certain temps de fonctionnement d'appareils ou circuits sur lesquels ces tubes sont utilisés. Il peut être nécessaire également de contrôler l'état de la paroi tubulaire de lignes de grande longueur telles que des pipe-lines.

Les tubes utilisés dans les appareils, ou dans les circuits reliant des appareils, ou dans les lignes de circulation de fluides, peuvent subir des températures élevées et éventuellement de hautes pressions.

En ce qui concerne les profilés pleins ou creux, il peut être nécessaire d'effectuer le contrôle des barres pleines, de section circulaire ou prismatique, plus spécialement des rails de circulation d'engins et de tout élément de forme allongée ayant une section transversale sensiblement constante.

Les contrôles non destructifs effectués sur les tubes et profilés peuvent avoir pour but de vérifier que leur intégrité est conforme à ce qui est exigé à la construction, ou de mettre en évidence des défauts apparus en fonctionnement.

Pour effectuer ces contrôles, on a proposé d'utiliser divers procédés mettant en oeuvre, par exemple, des sondes à courants de Foucault ou des méthodes d'examen radiographique.

Les dispositifs utilisés dans le cas de la mise en oeuvre de ces procédés sont en général encombrants, de telle sorte qu'il peut être difficile sinon impossible de faire passer ces dispositifs, au moins dans certaines parties des tubes, par exemple dans les parties coudées à faible rayon de courbure. Ces méthodes peuvent également être tout-à-fait inapplicables dans le cas de tubes pour échangeurs de chaleur de faible diamètre.

Dans le cas des générateurs de vapeur associés aux réacteurs nucléaires, les tubes d'échange peuvent avoir un diamètre interne inférieur à 20 mm et une longueur de l'ordre de 50 à 100 m.

En outre, les procédés par courants de Foucault ont une sensibilité réduite dans le cas de la détection des défauts des soudures des tubes ainsi que dans le cas du contrôle de matériaux ferromagnétiques.

Les dépôts qui peuvent être présents à l'intérieur ou à l'extérieur des tubes, dépôts pouvant être de nature métallique et par exemple constitués par du sodium solidifié dans le cas des générateurs de vapeur et des échangeurs de chaleur à neutrons rapides, sont susceptibles de perturber le signal correspondant aux courants de Foucault et de diminuer fortement la sensibilité de la détection.

L'utilisation de procédés de contrôle non destructif mettant en oeuvre des ultrasons a permis d'éviter certains des inconvénients mentionnés ci-dessus, dans le cas du contrôle des tubes de petit diamètre.

On a proposé d'utiliser des transducteurs d'ultrasons émettant un faisceau ultrasonore en direction de la paroi du tube à contrôler, donc dans un plan radial. Il est possible d'associer à ces transducteurs, des mécanismes permettant de faire effectuer mécaniquement au faisceau d'ultrasons un balayage du tube dans la direction circonférentielle ou suivant une hélice.

Pour effectuer un contrôle non destructif de la paroi d'un tube, par l'intérieur ou par l'extérieur du tube, en effectuant un balayage circonférentiel ou hélicoïdal, on a proposé d'utiliser un dispositif comportant un transducteur ou sonde ultrasonore qui peut être déplacé en translation suivant la direction axiale du tube et qui peut être mis en rotation autour d'un axe confondu avec l'axe du tube pendant le contrôle.

Le faisceau d'ultrasons produit par le transducteur peut être émis directement en direction de la paroi du tube ou renvoyé vers la paroi par un miroir.

De tels dispositifs présentent l'inconvénient de nécessiter l'utilisation de mécanismes complexes tels que des micromoteurs et des réducteurs permettant d'entraîner en rotation le transducteur et éventuellement le miroir, des moyens de liaison mécaniques comportant des cardans de petites dimensions ou encore des collecteurs tournants.

Les mécanismes permettant la mise en rotation du transducteur et du moteur sont d'un fonctionnement délicat et peuvent être sensibles à la présence de particules solides détachées de la paroi du tube et pouvant se trouver en suspension dans le fluide de couplage.

De par la conception du transducteur, l'angle d'incidence du faisceau d'ultrasons et la distance focale de ce faisceau sont fixes sauf si l'on envisage d'utiliser un miroir de forme complexe ou qui est déplacé de manière spécialement adaptée.

Enfin, de tels dispositifs présentent un encombrement important dans le sens de la longueur et/ou dans la direction diamétrale du tube.

On connaît également des dispositifs de contrôle par ultrasons de tubes de faible diamètre comportant un transducteur non tournant constitué de plusieurs éléments piézoélectriques placés dans un même plan, juxtaposés ou séparés par des pièces d'isolement, de manière à constituer un ensemble symétrique de révolution dans lequel chacun des éléments piézoélectriques est susceptible d'émettre un faisceau d'ultrasons formant des zones d'impact séparées, dans ce plan. Chaque faisceau permet d'analyser une zone d'impact définie du tube, et l'ensemble des faisceaux issus des éléments piézoélectriques d'un même plan ne permet donc pas d'effectuer une analyse complète de la circonférence du tube.

L'analyse circonférentielle de la paroi du tube par ces points d'impacts est obtenue par excitation, de manière successive et dans un ordre donné, de chacun des éléments piézoélectriques. Cependant, compte tenu de l'encombrement des éléments, les points d'impact des faisceaux constituant des taches focales sur la paroi du tube se trouvent relativement éloignés les uns des autres, dans le plan d'émission du transducteur.

Afin d'augmenter le nombre de ces points d'impact, on utilise des éléments piézoélectriques disposés suivant plusieurs rangées et dans des positions décalées.

Cependant, dans ce cas, on retrouve encore les inconvénients des transducteurs de type classique. En particulier, l'angle d'incidence du faisceau et la distance focale des ondes ultrasonores ne sont pas modifiables. Le dispositif peut être encombrant dans le sens de la longueur, du fait qu'il est nécessaire d'utiliser plusieurs rangées de transducteurs espacées dans la direction axiale. En outre, pendant l'utilisation du transducteur, il est nécessaire d'empêcher tout mouvement radial lors de son déplacement dans la direction axiale du tube, de manière à ne pas perdre la référence angulaire des points examinés.

En définitive, les dispositifs selon la technique antérieure sont généralement encombrants et ne peuvent pas être utilisés sur toute la longueur de tubes de faible diamètre ayant une longueur importante pouvant atteindre 100 m et qui sont cintrés avec de faibles rayons de courbure.

Par le US-A-3.693.415, on connaît un procédé et un dispositif de contrôle ultrasonore à balayage, pour la détection de fissures dans une pièce telle qu'un tube, dans lequel des transducteurs sont disposés suivant une rangée autour de la pièce et sont alimentés par groupes successifs, de manière à focaliser un faisceau d'ultrasons en des points successifs de la pièce en cours de contrôle. Ce procédé permet d'obtenir une tache focale étroite dans la direction circonférentielle d'un tube en cours d'examen. Cependant, dans la direction axiale du tube, suivant laquelle les transducteurs présentent une certaine longueur, la tache focale s'étend sur une longueur supérieure à la longueur des transducteurs, du fait de la divergence du faisceau d'ultrasons. Cette tache focale a donc la forme d'un "trait épais". La résolution du dispositif de controle est donc limitée et il n'est pas possible de détecter des fissures dont la taille est faible.

Le but de l'invention est donc de proposer un dispositif de contrôle non destructif par ultrasons d'éléments de forme allongée à section sensiblement constante comportant un transducteur d'ultrasons comprenant un support ayant une surface active dont la forme correspond à la forme de la surface de l'élément allongé, placée en vis-à-vis de la surface de l'élément allongé pendant les déplacements du transducteur et une pluralité d'éléments piézoélectriques fixés sur la surface active du support dans des dispositions adjacentes, des moyens de déplacement du transducteur suivant la direction longitudinale de l'élément de forme allongée, des moyens d'excitation électrique du transducteur pour l'émission d'ondes ultrasonores en direction d'au moins une surface de l'élément de forme allongée reliés aux éléments piézoélectriques et commandés de manière à produire une excitation séquentielle et un balayage en surface et/ou en profondeur de l'élément de forme allongée dans au moins une direction et des moyens de recueil et d'analyse de courants électriques de mesure provenant du transducteur, ce dispositif permettant de réaliser un contrôle de la paroi ou du volume de l'élément allongé avec une excellente résolution et de détecter des défauts tels que des fissures, de très petite taille.

Dans ce but, le support du transducteur comporte une surface active concave dont la section par un plan passant par l'axe du transducteur confondu avec l'axe longitudinal de l'élément de forme allongée est une ligne courbe dont la concavité est dirigée vers l'élément de forme allongée, les éléments piézoélectriques étant disposés suivant des lignes courbes axiales successives de la surface active du support du transducteur, de manière à permettre une focalisation, des ondes ultrasonores dans la direction axiale, c'est-à-dire dans la direction de l'axe de l'élément de forme allongée (voir revendication 1).

Dans le cas du contrôle de tubes et en particulier de tubes de petit diamètre et de grande longueur, le transducteur du dispositif suivant l'invention comporte un support ayant une surface active symétrique de révolution ayant des génératrices courbes et une pluralité d'éléments piézoélectriques disposés suivant des génératrices de la surface active, dans des positions angulaires successives autour de l'axe de la surface active du support qui sont éloignées l'une de l'autre de moins de 20° et de préférence de moins de 10° dans le cas de tubes de petit diamètre et les moyens d'excitation des éléments piézoélectriques sont commandés séquentiellement de manière à obtenir un balayage de la paroi du tube par des ondes ultrasonores, au moins dans la direction circonférentielle.

Afin de bien faire comprendre l'invention, on va maintenant décrire, à titre d'exemples non limitatifs, en se référant aux figures jointes en annexe, plusieurs modes de réalisation d'un dispositif de contrôle ultrasonore suivant l'invention et son utilisation pour le contrôle non destructif de tubes de petit diamètre et de grande longueur, de tubes de grands diamètres et d'éléments profilés tels que des rails.

La figure 1 est une vue d'ensemble d'un dispositif de contrôle non destructif par ultrasons suivant l'invention dont le transducteur est en position de service à l'intérieur d'un tube.

La figure 2 est une vue en élévation et en coupe d'une partie d'un dispositif de contrôle suivant l'invention introduite dans un tube dont on effectue le contrôle.

La figure 3 est une vue en élévation et en coupe montrant un transducteur d'un dispositif de contrôle suivant l'invention dans différentes positions au cours de son déplacement à l'intérieur d'un tube dont on effectue le contrôle.

Les figures 4A, 4B, 4C, 4D sont des vues en coupe et en élévation de transducteurs d'un dispositif de contrôle suivant l'invention et suivant plusieurs variantes de réalisation, en position à l'intérieur d'un tube à contrôler.

La figure 5 est une vue en coupe transversale d'un transducteur d'un dispositif de contrôle suivant l'invention en position à l'intérieur d'un tube.

La figure 6 est une vue en perspective d'un transducteur d'un dispositif suivant l'invention comportant un support de forme cylindrique.

La figure 7 est une vue en coupe axiale d'un transducteur d'un dispositif suivant l'invention permettant le contrôle de la paroi de tubes par l'extérieur.

La figure 8 est une vue en coupe transversale d'un transducteur d'un dispositif de contrôle suivant l'invention utilisé pour le contrôle par l'intérieur du tube, d'une soudure longitudinale d'un tube roulé et soudé.

La figure 9 est une vue en coupe axiale d'un dispositif de contrôle non destructif suivant l'invention utilisé pour le contrôle d'un tube de grand diamètre par l'extérieur.

La figure 10 est une vue en coupe axiale d'un dispositif suivant l'invention utilisé pour contrôler un tube de grand diamètre par l'intérieur.

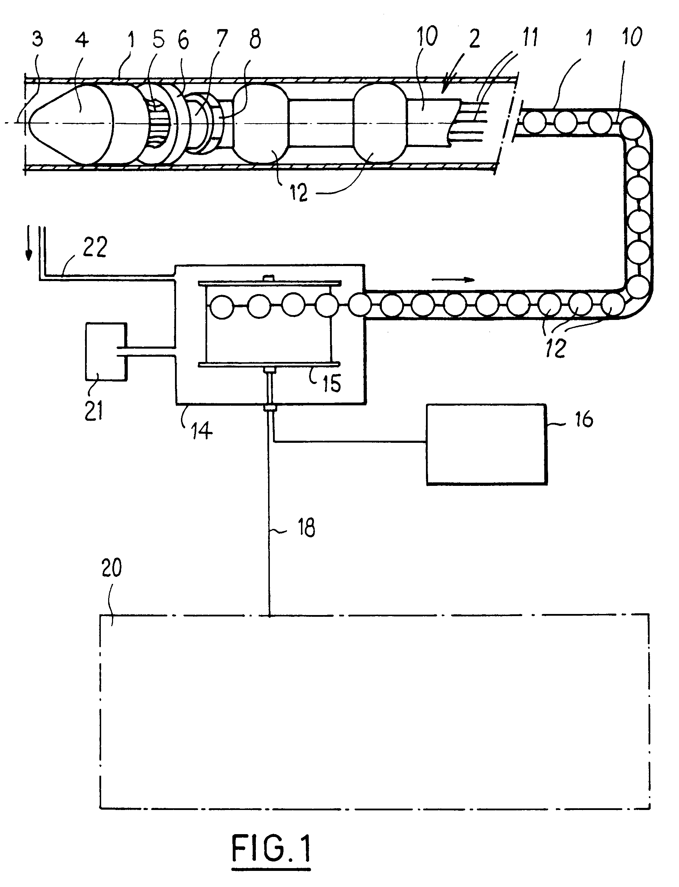

Sur la figure 1, on voit un dispositif de contrôle non destructif par ultrasons de la paroi d'un tube 1 ayant un faible diamètre, par exemple inférieur à 20 mm et qui peut présenter une grande longueur, par exemple de l'ordre de plusieurs dizaines de mètres.

Le dispositif suivant l'invention comporte une partie mobile désignée de manière générale par le repère 2 qui peut être déplacée à l'intérieur et suivant la direction de l'axe 3 du tube 1.

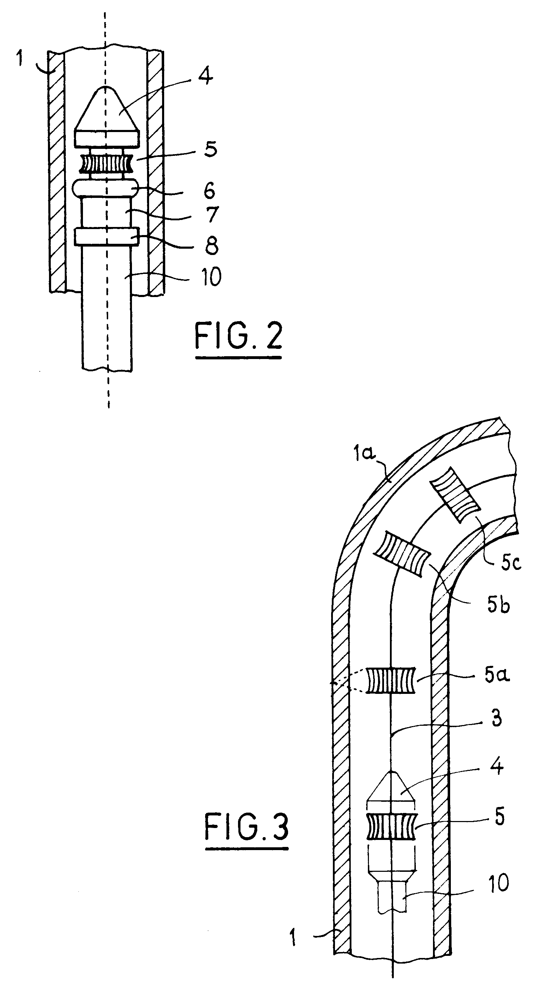

La partie mobile 2 comporte une extrémité antérieure qui est engagée en premier dans le tube 1 à contrôler et qui est représentée dans la partie supérieure de la figure 1 et sur la figure 2.

La partie antérieure de l'ensemble mobile du dispositif de contrôle comporte successivement, de l'avant vers l'arrière, une tête de guidage 4, un transducteur ultrasonore 5, une bague de guidage 6, un dispositif pré-amplificateur et multiplexeur 7 assurant la commutation des éléments sensibles du transducteur 5 et une bague de connexion électrique 8.

La partie antérieure de l'ensemble mobile 2 du dispositif de contrôle est fixée à l'extrémité d'un câble souple 10 constituant la partie de l'ensemble mobile 2, par l'intermédiaire de laquelle est assuré le déplacement en translation du transducteur 5 à l'intérieur du tube.

La tête de guidage 4 est constituée par un corps plein symétrique de révolution qui peut avoir la forme d'un cône ayant un sommet arrondi ou la forme d'une demi-sphère. Le diamètre maximal de la tête de guidage 4 et de la bague 6 sont inférieurs au diamètre intérieur du tube 1 à contrôler mais supérieurs au diamètre extérieur du transducteur ultrasonore 5.

Le câble 10 est réalisé sous forme tubulaire, de manière à permettre le passage, dans son alésage interne, et suivant toute sa longueur, de conducteurs électriques 11 permettant l'alimentation du transducteur 5 en courant électrique et le recueil des signaux de mesure provenant du transducteur 5, par l'intermédiaire de la bague de connexion 8.

Le câble 10 comporte des éléments de guidage 12 en saillie radiale sur sa surface externe, ces éléments de guidage pouvant avoir de manière préférentielle une forme torique ou une forme sphérique. Le diamètre extérieur des éléments de guidage 12 est légèrement inférieur au diamètre intérieur du tube 1, de manière à obtenir un guidage efficace de l'ensemble mobile 2 du dispositif de contrôle à l'intérieur du tube 1, pendant ses déplacements dans la direction axiale et à laisser le passage au fluide de couplage.

Le dispositif de contrôle suivant l'invention comporte également, à l'intérieur d'une enveloppe fermée 14 reliée de manière étanche à l'extrémité d'entrée du tube 1, un dispositif 15 de déplacement en translation du câble 10 de l'ensemble mobile 2. Le dispositif 15 peut être constitué sous la forme d'un tireur pousseur comportant un treuil d'enroulement et de dévidage du câble 10 qui peut être entraîné en rotation à vitesse contrôlée, à l'intérieur de l'enveloppe 14, par l'intermédiaire d'un axe relié à un moteur commandé par une unité de commande 16.

Les conducteurs 11 d'alimentation du transducteur 5 en courant électrique et de recueil des signaux de mesure électriques du transducteur sont connectés électriquement à des conducteurs d'un câble 18 d'alimentation du transducteur et de recueil des signaux, par exemple par l'intermédiaire d'un collecteur associé au treuil 15.

Le câble 18 est relié à une unité 20 comportant des moyens d'alimentation du transducteur en courant électrique et des moyens de recueil et d'analyse des signaux de mesure provenant du transducteur.

Une pompe de circulation 21 est reliée par une conduite au volume interne de l'enveloppe 14 et assure la circulation d'un liquide de couplage tel que de l'eau à l'intérieur du tube 1, de manière que ce liquide de couplage parvienne au niveau du transducteur 5 quelle que soit sa position à l'intérieur du tube 1.

Un conduit de retour 22 du liquide de couplage est également relié à l'enveloppe 14. On assure ainsi une circulation continue de liquide de couplage à l'intérieur du tube.

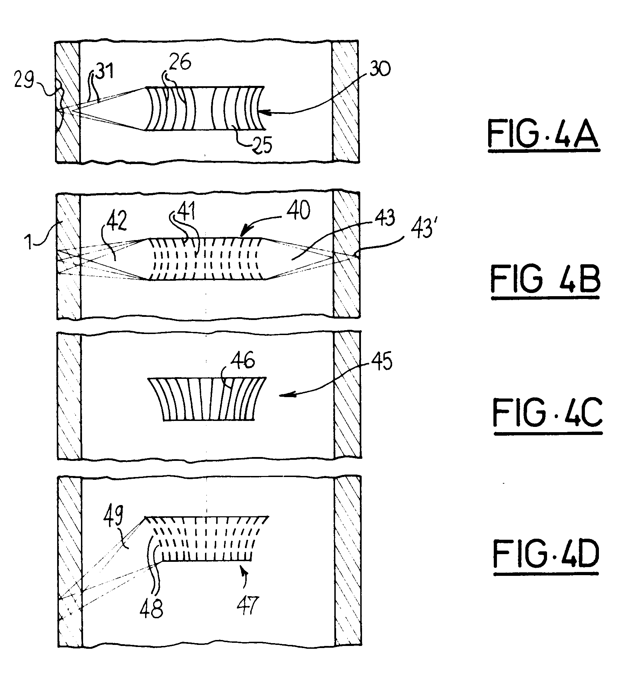

Sur la figure 3, on a représenté la partie d'extrémité antérieure de l'ensemble mobile d'un dispositif de contrôle suivant l'invention comportant une tête de guidage 4 et un transducteur 5 fixé à l'extrémité d'un câble de déplacement 10, dans une première position de service à l'intérieur d'un tube 1 comportant un coude la et dans trois positions successives 5a, 5b et 5c, lors du déplacement de l'ensemble mobile du dispositif de contrôle suivant l'axe 3 du tube 1.

Le transducteur 5 présente la forme d'une pastille ayant une surface latérale concave dont le diamètre maximal est sensiblement inférieur au diamètre intérieur du tube 1 et dont l'épaisseur dans la direction axiale du tube est faible. De cette manière, le transducteur 5 peut être facilement déplacé à l'intérieur du tube, même dans des zones coudées telles que la zone la présentant un faible rayon de courbure, du fait que le transducteur 5 fixé à l'extrémité du câble souple 10 est susceptible de prendre librement des orientations successives (positions 5a, 5b et 5c) à l'intérieur du tube dans sa partie coudée.

Dans toutes les positions successives du transducteur 5, la surface latérale externe concave de ce transducteur constituant la surface active d'émission des ultrasons, comme il sera expliqué plus loin, reste constamment dirigée vers la surface interne du tube 1.

Un transducteur suivant l'invention dont la structure sera décrite plus loin et qui présente la forme générale d'une pastille de forme plate à surface latérale concave dont le diamètre maximal est sensiblement inférieur au diamètre intérieur du tube peut donc permettre le contrôle d'un tube par l'intérieur, même dans le cas où ce tube présente un faible diamètre, une grande longueur et des parties coudées à faible rayon de courbure.

On va maintenant se reporter aux figures 4A, 5 et 6, pour décrire un transducteur d'un dispositif de contrôle ultrasonore suivant l'invention réalisé sous la forme d'une pastille plate symétrique de révolution et à surface latérale concave.

Le transducteur 30 est constitué par un support 25 ayant la forme d'une pastille dont l'épaisseur est sensiblement inférieure au diamètre. Le support 25 peut être réalisé de préférence et de manière non obligatoire, en un matériau amortissant les ultrasons.

Le support du transducteur 30 qui est symétrique de révolution présente une génératrice définissant sa surface latérale externe qui est courbe et dont la concavité est dirigée vers l'extérieur, de sorte que la surface latérale externe du support présente une forme creuse.

Les éléments piézoélectriques 36 sont constitués par des barreaux ayant eux-mêmes une forme courbe correspondant à la forme de la génératrice du support. Ces éléments piézoélectriques sont fixés contre la surface latérale externe du transducteur suivant des génératrices du support.

Le transducteur 30 associé à un ensemble mobile de déplacement tel que représenté sur la figure 1 est introduit et déplacé axialement dans le tube 1, de telle manière que son axe de symétrie soit confondu avec l'axe du tube.

La forme géométrique de la surface externe du transducteur sur laquelle sont fixés les barreaux piézoélectriques courbes 26 permet d'obtenir une focalisation des ondes ultrasonores, dans la direction axiale du transducteur et du tube 1 par simple effet géométrique dû à la courbure de la surface du support 25 et des barreaux piézoélectriques 26. Cette focalisation pourra être désignée par le terme de "focalisation géométrique". On obtient donc une tache focale dont la dimension dans la direction axiale est faible.

De plus, le transducteur 30 permet d'obtenir une focalisation variable d'un faisceau d'ondes ultrasonores 31 engendrées par les éléments piézoélectriques 26, la distance focale du faisceau dépendant de la courbure du support et des séquences d'excitation des éléments piézoélectriques 26.

On peut ainsi focaliser le faisceau dans une zone fine déterminée de la paroi du tube 1.

Dans le cas d'un tube à contrôler ayant un diamètre intérieur de l'ordre de 20 mm, on pourra utiliser, de manière avantageuse, une pastille support ayant un diamètre maximal de l'ordre de 10 mm et une épaisseur de l'ordre de 4 mm.

Sur la surface latérale de la pastille, sont fixés des éléments piézoélectriques 26 de très petites dimensions, ayant la forme de barreaux courbes.

Les barreaux 26 sont constitués par une matière cristalline ayant des propriétés de piézoélectricité, c'est-à-dire une matière qui peut être excitée par un courant électrique, de manière à vibrer et à engendrer des ondes ayant une fréquence correspondant au domaine des ondes ultrasonores.

Dans le cas d'une pastille support 25 de 10 mm de diamètre maximal et de 4 mm d'épaisseur, les barreaux 26 ont une longueur voisine de 4 mm, une largeur l dans la direction circonférentielle de 0,3 à 0,4 mm et une épaisseur e dans la direction radiale de 0,1 à 0,3 mm.

Chacun des barreaux piézoélectriques 26 est relié par des conducteurs électriques à un circuit de commutation tel que le circuit 7 représenté sur la figure 1 permettant d'alimenter le barreau en courant électrique d'excitation et de recueillir les courants de mesure émis par le barreau 26 en vibration.

L'adaptation des dimensions des barreaux précités, en largeur et épaisseur, permet de générer des fréquences supérieures à celles connues (5 à 7,5 MHz) puisqu'elles peuvent atteindre 10 ou 15 MHz. On obtient ainsi une résolution poussée du dispositif de contrôle, du fait que les longueurs d'ondes se trouvent considérablement diminuées par rapport aux longueurs d'ondes utilisées habituellement pour le contrôle par ultrasons.

Les barreaux piézoélectriques 26 sont fixés sur la surface latérale extérieure de la pastille 25, dans des positions successives dans la direction circonférentielle, avec un espacement sensiblement constant.

Dans le cas d'une pastille support ayant un diamètre de 10 mm et de barreaux ayant une largeur un peu supérieure à 0,3 mm, il est possible de placer quatre-vingts barreaux piézoélectriques 26 avec un très léger écartement entre eux, sur la totalité de la surface latérale de la pastille.

Dans ce cas, les positions angulaires autour de l'axe de la pastille de deux barreaux piézoélectriques successifs 26a et 26b sont séparées par un angle α dont la valeur est voisine de 4°.

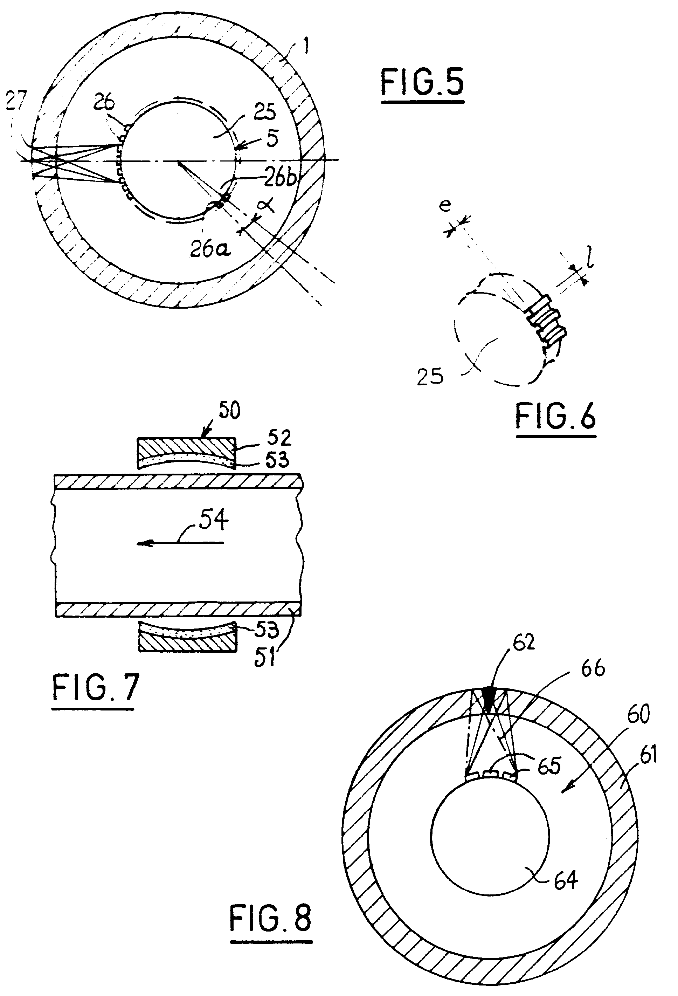

Sur la figure 5, les barreaux piézoélectriques 26a et 26b ont été représentés dans des positions réciproques fictives, l'angle α ayant une valeur sensiblement supérieure à 4°, de manière à faciliter et à rendre plus claire la représentation.

Il est bien évident qu'une alimentation séquentielle des barreaux piézoélectriques individuels 26 ou de groupes de barreaux 26, disposés suivant la circonférence de la pastille 25, permet de réaliser un balayage circonférentiel de la paroi du tube 1 dans lequel le transducteur 5 est disposé de manière que l'axe de la pastille 25 soit sensiblement confondu avec l'axe du tube 1.

La focalisation des faisceaux d'ultrasons produits par les éléments piézoélectriques 26 au niveau de la surface extérieure du tube 1 permet d'obtenir une tache focale 27 de faible étendue dans la direction circonférentielle dont les positions angulaires successives autour de l'axe du tube obtenues par balayage, sont éloignées les unes des autres de 4° environ. On obtient ainsi une très bonne résolution lors du balayage de la paroi du tube 1 par le faisceau d'ondes ultrasonores.

La conjonction du balayage circonférentiel et de la focalisation géométrique due à la forme courbe de la surface active du transducteur permet d'obtenir la sensibilité nécessaire pour effectuer les contrôles et recherches de défaut, grâce à une tache focale de très faible dimension.

Les ondes réfléchies par des défauts éventuels de la paroi du tube 1 sont reçues par les éléments piézoélectriques 26 qui émettent des signaux électriques caractéristiques de la présence de ces défauts.

Les signaux électriques provenant des éléments piézoélectriques 26 qui sont analysés dans l'unité de traitement du dispositif de contrôle permettent de déceler de manière très précise et très sensible la présence de défauts dans la paroi du tube.

Il est à remarquer que le balayage circonférentiel de la paroi du tube 1 est obtenu uniquement par des moyens électroniques, sans avoir à mettre en rotation le transducteur 5 à l'intérieur du tube 1.

On peut donc effectuer un contrôle complet de la paroi du tube 1 en déplaçant le transducteur 5 à l'intérieur du tube, uniquement en translation dans la direction axiale de ce tube.

Le pouvoir de résolution de la sonde ultrasonore 5 comportant des éléments piézoélectriques sur sa surface latérale peut être adapté à la finesse des défauts recherchés ou au diamètre des tubes à contrôler. Il peut être augmenté ou diminué, par accroissement ou réduction du nombre total des éléments piézoélectriques répartis sur la surface latérale de la sonde et/ou par ajustement de la courbure de la surface active et des barreaux piézoélectriques.

On peut ainsi utiliser plusieurs centaines ou quelques dizaines d'éléments piézoélectriques de très faibles dimensions disposés de manière successive à la périphérie d'un support symétrique de révolution à génératrice courbe. Les positions angulaires des éléments piézoélectriques successifs autour de l'axe du support de la sonde, dans le cas où ces éléments piézoélectriques sont régulièrement espacés sur la périphérie du support, peuvent être éloignées les unes des autres d'un angle de l'ordre d'un degré ou même d'une valeur inférieure. Dans le cas où les performances souhaitées pour le contrôle l'autorisent, les éléments peuvent être espacés par exemple de 10 à 20°.

Dans le cas d'un transducteur utilisé, dans le cadre de l'invention, pour le contrôle de tubes de petit diamètre, une finesse d'analyse suffisante et un balayage efficace de la paroi du tube seront obtenus si la distance angulaire de deux positions successives d'éléments piézoélectriques est inférieure à 10°. Dans le cas où l'on dispose des éléments piézoélectriques sur toute la périphérie d'une sonde cylindrique ou plus généralement à symétrie de révolution, on disposera autour de la sonde au moins soixante-douze éléments piézoélectriques régulièrement espacés.

Cependant, il est possible également d'utiliser des transducteurs qui comportent des éléments piézoélectriques sur une partie seulement de leur périphérie, selon l'utilisation que l'on veut en faire.

Dans ce cas, il est possible d'utiliser un faible nombre d'éléments piézoélectriques placés sur une faible partie de la circonférence de la sonde.

Comme décrit plus loin, il est par exemple possible d'utiliser seulement trois éléments piézoélectriques disposés sur la surface périphérique d'un support de sonde, de manière à contrôler une soudure longitudinale de faible largeur d'un tube roulé et soudé.

Dans tous les cas cependant, il est nécessaire que deux éléments piézoélectriques successifs disposés à la périphérie du support soient séparés par une distance angulaire faible, aux environs de 10°, ou moins, de manière à obtenir les avantages apportés par le dispositif suivant l'invention et en particulier, une finesse d'analyse suffisante.

Le transducteur 30 représenté sur la figure 4A permet de déceler des défauts dans la paroi du tube 1, tels que par exemple une fissure 29 située à un endroit quelconque à l'intérieur de la paroi du tube 1, par émission d'un faisceau d'ondes ultrasonores 31 en direction de la paroi du tube et focalisation de ce faisceau au voisinage de la surface externe du tube 1.

Un balayage circonférentiel de la paroi du tube et du défaut 29 est obtenu par une excitation séquentielle des éléments piézoélectriques 26 du transducteur 5.

Sur la figure 4B, on a représenté un transducteur 40 qui est une variante de réalisation du transducteur 30 représenté sur la figure 4A.

Le support du transducteur 40 qui présente une surface latérale externe concave peut être réalisé de la même manière que le support 25 du transducteur 30.

Les éléments piézoélectriques courbes continus 32 tels qu'utilisés pour constituer le transducteur 30 sont remplacés par des éléments piézoélectriques ou particules de petites dimensions 41 qui sont placés sur la surface latérale externe du support, suivant des lignes correspondant à des courbes génératrices.

Par excitation séquentielle des éléments piézoélectriques 41, suivant les lignes génératrices, on peut obtenir un balayage local de la paroi du tube 1 dans la direction longitudinale, comme schématisé par l'ensemble de faisceaux d'ondes ultrasonores 42 montrant la position successive du faisceau, pendant le balayage.

En agissant sur le signal électrique d'émission et de réception d'un groupe d'éléments piézoélectriques 41, grâce à des lignes à retard, on peut également faire varier la distance focale des faisceaux d'ondes ultrasonores, comme représenté par les faisceaux 43 et 43′ qui correspondent respectivement à une focalisation sur la surface interne et sur la surface externe du tube. En faisant varier les conditions d'émission et de réception des éléments piézoélectriques 41 entre les conditions correspondant à l'émission et à la réception des faisceaux 43 et 43′, on peut réaliser une focalisation radiale. On la désigne par focalisation dynamique. Elle permet d'explorer la paroi du tube 1 suivant toute son épaisseur.

Il est donc possible, en utilisant des transducteurs de forme adaptée, de réaliser non seulement un balayage circonférentiel mais encore un balayage dans la direction longitudinale et dans la direction radiale de la paroi du tube.

On peut ainsi réaliser en utilisant uniquement des moyens électroniques de commutation, le balayage et l'exploration de toute une zone volumique de la paroi du tube.

La commutation des différents éléments piézoélectriques peut être obtenue par un dispositif de multiplexage tel que représenté en 7 sur la figure 2. Un tel dispositif permet de transmettre de multiples informations de manière séquentielle, en direction des éléments piézoélectriques ou en provenance de ces éléments.

En outre, il est possible d'effectuer une excitation programmée d'un groupe d'éléments piézoélectriques, de manière à obtenir un champ ultrasonore dont l'ouverture et les caractéristiques sont voisines de celles qui seraient obtenues à partir d'un transducteur comportant une pastille piézoélectrique unique.

Sur la figure 4C, on a représenté un transducteur 45 suivant une variante de réalisation, le transducteur 45 comportant un support symétrique de révolution à génératrices courbes et ayant une direction générale inclinée par rapport à l'axe de symétrie du support et des éléments piézoélectriques courbes 46 ayant la forme de barreaux disposés sur la surface latérale externe du support, suivant des génératrices de ce support.

Sur la figure 4D, on a représenté un transducteur 47, qui est une variante de réalisation du transducteur 45, les barreaux piézoélectriques 46 étant remplacés par des éléments piézoélectriques 48 de petites dimensions ou particules disposés suivant les génératrices du support du transducteur 47, avec un faible espacement.

Le transducteur 47 permet, par alimentation séquentielle des éléments piézoélectriques 48, d'effectuer un balayage longitudinal de la paroi du tube 1, par des faisceaux ultrasonores inclinés 49.

Dans le cas d'un transducteur tel que le transducteur 47, on peut également obtenir, en réalisant une excitation séquentielle des éléments piézoélectriques disposés suivant plusieurs génératrices successives, une déflection angulaire du faisceau, de manière à réaliser une analyse de la paroi du tube dans un plan quelconque, c'est-à-dire un plan différent d'un plan axial ou d'un plan transversal.

Dans tous les cas, le balayage est obtenu uniquement par des moyens électroniques extrêmement rapides et ne met pas en oeuvre de moyens mécaniques.

Pour l'examen d'un tube de grande longueur, il est donc simplement nécessaire de déplacer le transducteur suivant la direction axiale du tube.

La vitesse de balayage et d'exploration de la paroi du tube peut être très élevée, ce qui serait impossible dans le cas où l'on utiliserait des moyens mécaniques de balayage et en particulier des moyens de mise en rotation de la sonde autour de son axe.

Lorsqu'on réalise l'inspection de parties courbes ou cintrées du tube, comme représenté sur la figure 3, le dispositif suivant l'invention permet de compenser automatiquement une désorientation éventuelle du transducteur par rapport à la direction axiale du tube, l'axe du transducteur ne se trouvant plus exactement dirigé suivant l'axe du tube. En effet, l'intensité variable des échos reçus par les éléments piézoélectriques en provenance de la paroi du tube permet de connaître de manière très précise l'orientation du transducteur dans le tube et de corriger en conséquence les informations transmises par le transducteur.

Sur la figure 7, on a représenté le transducteur 50 d'un dispositif suivant l'invention permettant d'effectuer le contrôle non destructif par ultrasons de la paroi d'un tube 51, par l'extérieur du tube.

Le transducteur 50 comporte un support 52 de forme annulaire dont l'alésage intérieur courbe dans la direction axiale et concave présente un diamètre minimal supérieur au diamètre du tube 51 à contrôler.

Sur la surface intérieure concave du support annulaire 52 sont fixés des barreaux piézo-électriques courbes, suivant des génératrices de cette surface de révolution, dans des positions angulaires autour de l'axe du support 52 du transducteur 50, décalées les unes par rapport aux autres d'un angle faible, de l'ordre de quelques degrés et toujours aux environs de 10°, ou moins.

Les barreaux piézoélectriques 53 présentent une longueur sensiblement égale à la longueur axiale du support annulaire 52.

Le contrôle non destructif de la paroi du tube 51 est effectué en réalisant un déplacement relatif dans la direction axiale 54, du transducteur 50, par rapport au tube 51. Ce déplacement relatif peut être obtenu par déplacement du tube à l'intérieur de l'alésage du transducteur 50 maintenu en position fixe ou, au contraire, par déplacement dans la direction axiale du transducteur 50 placé à la périphérie de la surface externe du tube 51.

Les éléments piézoélectriques 53 sont ainsi disposés en vis-à-vis de la surface externe du tube 51, de manière à émettre des faisceaux d'ondes ultrasonores en direction de la paroi du tube.

Un liquide de couplage tel que de l'eau vient remplir l'espace annulaire entre le transducteur 50 et le tube 51, pendant le contrôle, de manière à assurer le couplage entre les éléments piézoélectriques 53 et la paroi du tube 51.

Il est également possible, dans certains cas, de placer le tube dans un bac renfermant le liquide de couplage et de déplacer le transducteur suivant l'axe du tube plongé dans le liquide de couplage.

Un dispositif selon l'invention comportant un transducteur annulaire tel que le transducteur 50 peut être utilisé sans difficulté dans le cas du contrôle de tubes droits après leur fabrication et avant le montage de ces tubes dans une installation telle qu'un échangeur de chaleur.

En revanche, dans le cas de tubes courbes ou cintrés ou dans le cas de tubes montés à l'intérieur de l'enveloppe d'un échangeur de chaleur, il est généralement préférable d'utiliser un dispositif de contrôle comportant un transducteur qui est déplacé dans la direction axiale à l'intérieur des tubes à contrôler.

Sur la figure 8, on a représenté un tube 61 obtenu par enroulement d'un produit plat et soudage suivant un cordon de soudure rectiligne 62 des bords du produit plat rapportés l'un contre l'autre.

On a représenté à l'intérieur du tube 61, le transducteur 60 d'un dispositif de contrôle non destructif par ultrasons suivant l'invention permettant d'effectuer le contrôle du cordon de soudure rectiligne 62, par déplacement dans la direction axiale du transducteur 60, à l'intérieur du tube 61.

Le transducteur 60 comporte un support 64 ayant la forme d'une pastille symétrique de révolution à génératrices courbes dont le diamètre est sensiblement inférieur au diamètre intérieur du tube 61 sur la surface latérale externe de laquelle sont disposés des éléments piézoélectriques 65.

Comme dans le cas du transducteur 5 représenté sur les figures 4A, 5 et 6, les éléments piézoélectriques 65 sont constitués par des barreaux courbes de petites dimensions en matériau piézoélectrique dont la longueur est sensiblement égale à l'épaisseur de la pastille de support 64.

Dans le cas d'un transducteur 60 destiné au contrôle d'une zone périphérique de faible largeur d'un tube tel que le cordon de soudure 62, le contrôle peut être effectué en utilisant un nombre réduit d'éléments piézoélectriques occupant une partie restreinte de la surface périphérique du support cylindrique 64.

Dans le cas du contrôle du cordon de soudure 62 d'un tube roulé et soudé tel que représenté sur la figure 8, on utilise un transducteur 60 comportant trois éléments piézoélectriques en forme de barreaux qui peuvent être identiques aux éléments piézoélectriques 26 du transducteur 5 qui a été décrit plus haut.

Les trois éléments piézoélectriques 65 sont disposés dans une zone périphérique de dimension restreinte du support 64, de manière que les positions angulaires de ces éléments piézoélectriques 65 autour de l'axe de la pastille 64 soient éloignées les unes des autres d'un angle faible, de l'ordre de quelques degrés, cet angle étant, dans tous les cas, toujours aux environs de 10°, ou moins.

Il est ainsi possible d'effectuer un balayage et un contrôle local de la paroi du tube, dans la zone du cordon de soudure 62.

Par excitation successive des trois éléments piézoélectriques 65, on obtient un déplacement du faisceau d'ondes ultrasonores 66 produit par les éléments piézoélectriques, de manière à réaliser un balayage de la zone du tube comportant le cordon de soudure 62.

Du fait que les éléments piézoélectriques 65 présentent une faible largeur et sont disposés avec un faible écart angulaire autour de l'axe de la pastille, on peut obtenir une analyse fine de la zone du tube comportant la soudure 62.

Le balayage de la zone à contrôler est effectué uniquement par des moyens électroniques, si bien qu'il n'est pas nécessaire de déplacer le transducteur en rotation autour de son axe et qu'il est uniquement nécessaire de déplacer ce transducteur dans la direction axiale à l'intérieur du tube, pour effectuer le contrôle de la soudure 62 sur toute sa longueur.

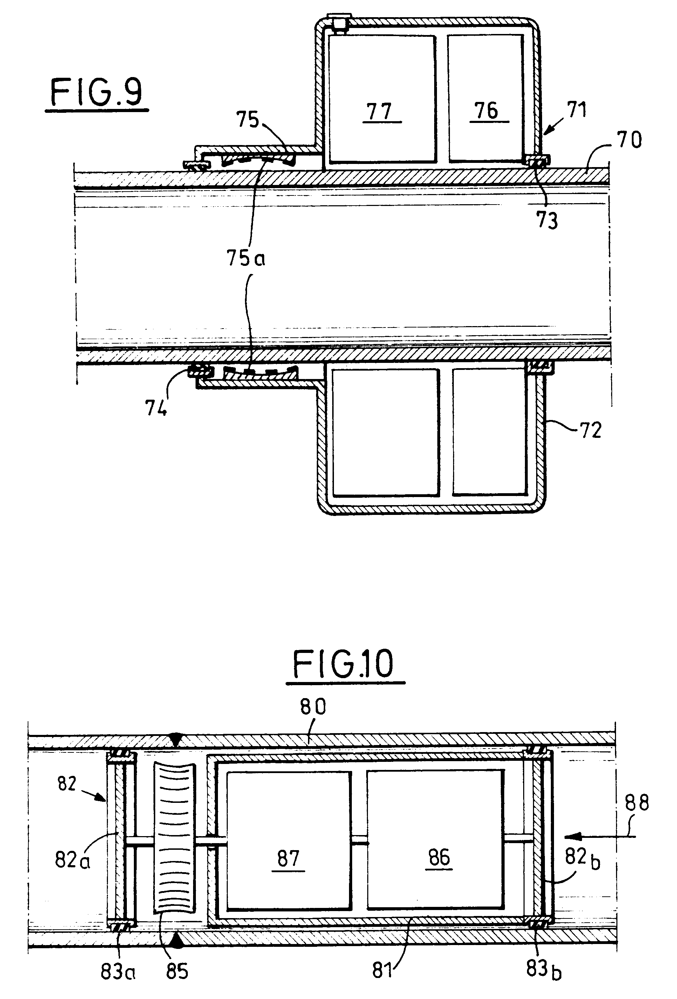

Les figures 9 et 10 montrent qu'il est également possible d'effectuer le contrôle de la paroi d'un tube de grand diamètre et d'un cordon de soudure d'un tel tube roulé et soudé par l'extérieur ou par l'intérieur du tube, en utilisant un dispositif de contrôle suivant l'invention comportant un transducteur adapté au contrôle à effectuer ayant un support de forme soit annulaire, soit cylindrique à génératrices courbes, sur la surface duquel sont placés des éléments piézoélectriques de petites dimensions, dans des positions voisines.

Sur la figure 9, on voit un tube 70 de grand diamètre dont on réalise le contrôle non destructif en utilisant un dispositif 71 selon l'invention.

Le dispositif 71 comporte un boîtier 72 monté mobile dans la direction axiale sur la surface extérieure du tube 70. Deux joints 73 et 74 assurent une jonction étanche entre le boîtier 72 et la surface extérieure du tube 70. Un transducteur 75 de forme annulaire dont la surface interne comporte des génératrices courbes est fixé à l'intérieur du boîtier dans une disposition coaxiale par rapport au tube 70 et autour du tube. Le transducteur 75 comporte une surface interne active 75a placée en vis-à-vis du tube 70 sur laquelle sont disposés des éléments piézoélectriques courbes dont la concavité est dirigée vers le tube à contrôler, dans des positions angulaires voisines autour de l'axe du transducteur placé suivant l'axe du tube. Le boîtier 72 renferme également un ou plusieurs modules électroniques 76 permettant d'alimenter les éléments piézoélectriques du transducteur de manière séquentielle et de recueillir et de traiter les signaux provenant de ces éléments piézoélectriques.

Un réservoir 77 permet d'introduire un liquide de couplage dans le boîtier, de manière que du liquide de couplage soit toujours présent entre la surface 75a du transducteur et le tube 70.

Le dispositif 81 représenté sur la figure 10 permet de contrôler un tube 80 de grand diamètre, par l'intérieur. Le dispositif 81 comporte un châssis 82 constitué par deux flasques 82a et 82b reliés entre eux et portant des joints d'étanchéité, respectivement 83a et 83b permettant de fermer de manière relativement étanche le volume du tube 80 compris entre les flasques.

Le dispositif mobile 81 comporte de plus, un transducteur symétrique de révolution à génératrices courbes 85, un coffret constitué de plusieurs modules électroniques 86 et un réservoir de liquide de couplage 87.

Le transducteur 85 peut être réalisé d'une manière analogue au transducteur représenté sur la figure 4A. Le coffret électronique 86 permet d'alimenter les éléments piézoélectriques du transducteur 85 et de recueillir et de traiter les signaux de mesure reçus par le transducteur.

Dans le cas du dispositif représenté sur la figure 9, un moyen annexe non représenté permet de déplacer le dispositif 71 dans la direction axiale du tube 70.

Dans le cas du dispositif représenté sur la figure 10, le déplacement de l'ensemble mobile 81 peut être assuré par un fluide circulant dans la direction axiale du tube 80 ou par des moyens annexes.

Lorsque celà est possible, on utilise de préférence le même fluide pour assurer le déplacement de l'ensemble mobile 81 et le couplage ultrasonore entre le transducteur 85 et la paroi 80.

Les dispositifs tels que représentés sur les figures 9 et 10 permettent de contrôler la paroi de tubes qui peuvent être de très grande longueur ou de lignes telles que des pipe-lines, avec un balayage de toute la paroi du tube.

Le dispositif de contrôle suivant l'invention peut être utilisé pour effectuer le contrôle non destructif par ultrasons de tubes de grande longueur comportant des cintres ou des parties coudées à faible rayon de courbure, ce rayon de courbure pouvant être par exemple de l'ordre de 3 à 5 fois le diamètre des tubes et pour effectuer le contrôle de profilés.

Les contrôles effectués par le dispositif suivant l'invention peuvent permettre de mettre en évidence, de localiser ou de mesurer des défauts tels que des défauts de fabrication de tubes ou profilés, une diminution de l'épaisseur des tubes sous l'effet de l'usure, de la corrosion ou de l'érosion ou encore des fissures ou amorces de rupture.

Dans tous les cas, le dispositif suivant l'invention permet d'effectuer un balayage en surface et en profondeur de la paroi du tube ou du profilé assurant une détection et une analyse très fine des défauts. Ce balayage est obtenu sans avoir à réaliser un déplacement de la sonde par rapport au tube, autre qu'un déplacement en translation dans la direction axiale du tube.

Pour les tubes de grands diamètres, ou les profilés, un balayage axial est obtenu en déplaçant le transducteur soit par l'intermédiaire du fluide véhiculé, soit par un moyen annexe externe ou interne par rapport au tube.

Le balayage en surface et en profondeur d'une zone de la paroi du tube ou du profilé peuvent être réalisés de manière très rapide, par des moyens électroniques.

Le balayage peut être réalisé dans la direction circonférentielle, dans la direction longitudinale et/ou suivant l'épaisseur du tube ; il est possible de réaliser une détection et une analyse des défauts dans un plan ayant une orientation quelconque par rapport à l'axe du tube.

Le dispositif suivant l'invention permet d'obtenir une résolution adaptée à l'application envisagée et à la constitution du transducteur. Cette résolution est supérieure à celle qui est obtenue avec des transducteurs de type connu comportant des éléments piézoélectriques massifs dont les dimensions sont très supérieures aux dimensions des éléments piézoélectriques d'un dispositif suivant l'invention.

Dans le cas du dispositif suivant l'invention, la disposition sur un support courbe d'éléments piézoélectriques de très faibles dimensions et l'excitation séquentielle de ces éléments piézoélectriques permettent d'obtenir une très bonne résolution et un balayage de zones de la paroi définies de manière très précise par des moyens uniquement électroniques. En outre, dans le cas des dispositifs de contrôle non destructif suivant l'invention, il est possible d'utiliser des transducteurs de très faibles dimensions, ce qui permet d'effectuer facilement le contrôle de tubes coudés ou cintrés présentant un faible rayon de courbure, par l'intérieur des tubes.

Le dispositif suivant l'invention peut donc être utilisé très facilement aussi bien dans le cas du contrôle des tubes et profilés en cours de fabrication que du contrôle en cours d'exploitation, par exemple à l'intérieur d'appareils tels que les échangeurs de chaleur ou les générateurs de vapeur à tubes droits, à tubes cintrés ou à tubes enroulés en hélice.

Le dispositif suivant l'invention permet de réaliser très rapidement le contrôle de tubes de très grandes longueurs, par exemple d'une longueur pouvant atteindre 100 m ; en effet, le transducteur peut être déplacé à une vitesse élevée de l'ordre de 12 m/minute dans la direction axiale du tube sans que la qualité du contrôle ne soit affectée.

Dans le cas du contrôle de tubes, de petit diamètre et de longueur supérieure à 10 mètres, une partie au moins des moyens électroniques utilisés pour effectuer l'émission et la réception des signaux ainsi que le balayage électronique par multiplexage doit être associée au transducteur de manière à être déplacée avec le transducteur à l'intérieur des tubes.

L'invention ne se limite pas au mode de réalisation qui a été décrit.

C'est ainsi qu'on peut utiliser des transducteurs dont le support présente une forme qui n'est pas symétrique de révolution et sur la surface extérieure duquel sont fixés des éléments piézoélectriques de faibles dimensions placés dans des positions relatives permettant d'obtenir uniquement par des moyens électroniques, un balayage de la surface et de l'épaisseur de la paroi d'un tube ou d'un profilé.

Les moyens d'excitation des éléments piézoélectriques du transducteur, les moyens de recueil des signaux de mesure et les moyens de commutation qui leur sont associés peuvent être de tout type connu de la technique dans le domaine de l'électronique.

Les moyens de guidage et de déplacement de l'ensemble mobile du dispositif de contrôle comportant le transducteur peuvent être réalisés d'une manière différente de celle qui a été décrite.

En particulier, on peut utiliser un dispositif tireur-pousseur d'un type quelconque pour réaliser le déplacement d'un transducteur, un élément tel qu'un câble souple assurant le support, le déplacement et l'alimentation du transducteur.

On peut également utiliser un dispositif connu pour déplacer le châssis ou le boîtier portant le transducteur, ou encore utiliser le fluide véhiculé dans un tube.

## Revendications

1. Dispositif de contrôle non destructif par ultrasons d'éléments de forme allongée à section sensiblement constante (1, 51, 61, 70, 80) comportant un transducteur d'ultrasons (5, 30, 40, 45, 47, 50, 60, 75, 85) comportant un support (25, 52, 64) ayant une surface active (75a) dont la forme correspond à la forme de la surface de l'élément allongé, placée en vis-à-vis de la surface de l'élément allongé pendant les déplacements du transducteur et une pluralité d'éléments piézoélectriques (26, 41, 46, 48, 53, 65) fixés sur la surface active du support dans des dispositions adjacentes, des moyens de déplacement (10, 15, 16) du transducteur suivant la direction longitudinale de l'élément de forme allongée, des moyens d'excitation électrique (7, 8, 76, 86) du transducteur pour l'émission d'ondes ultrasonores en direction d'au moins une surface de l'élément de forme allongée reliés aux éléments piézoélectriques et commandés de manière à produire une excitation séquentielle pour obtenir une focalisation et un balayage circonférentiel dans un plan de l'élément de forme allongée et/ou une focalisation en profondeur dans ce même plan et des moyens de recueil et d'analyse (20, 76, 86) de courants électriques de mesure provenant du transducteur, caractérisé par le fait que le support (25, 52, 64) du transducteur (5, 30, 40, 45, 47, 50, 60, 75, 85) comporte une surface active concave dont la section par un plan passant par l'axe du transducteur confondu avec l'axe longitudinal de l'élément de forme allongée (1, 51, 61, 70, 80) est une ligne courbe dont la concavité est dirigée vers l'élément de forme allongée, les éléments piézoélectriques étant disposés suivant des lignes courbes axiales successives de la surface active du support du transducteur, de manière à permettre une focalisation des ondes ultrasonores dans la direction axiale, c'est-à-dire dans la direction de l'axe de l'élément de forme allongée.

2. Dispositif suivant la revendication 1, dans le cas où les éléments de forme allongée (1, 51, 61, 70, 80) sont des éléments tubulaires dont on contrôle la paroi, caractérisé par le fait que le support (25, 52, 64) du transducteur (5, 30, 40, 45, 47, 50, 60, 75, 85) comporte une surface active (75a) symétrique de révolution placée en vis-à-vis d'une surface de l'élément tubulaire pendant les déplacements du transducteur, les lignes courbes constituant des génératrices de la surface active de révolution et les éléments piézoélectriques (26, 41, 46, 48, 53, 65) étant fixés suivant des génératrices de la surface active du support, dans des positions angulaires successives autour de l'axe de la surface active du support éloignées l'une de l'autre de 20° au plus.

3. Dispositif suivant la revendication 2, caractérisé par le fait que le transducteur (5, 30, 35, 40, 45, 47, 60, 85) est associé à des moyens (10, 15, 16) pour son déplacement en translation dans la direction axiale, à l'intérieur de l'élément tubulaire (1, 51, 61, 80).

4. Dispositif suivant la revendication 2, caractérisé par le fait que le support (52) du transducteur (50, 75) présente une forme annulaire, les éléments piézoélectriques (53) étant fixés sur la surface intérieure à génératrices courbes du support annulaire (52) disposée en vis-à-vis de la surface extérieure du tube (51), en déplacement relatif dans la direction axiale (54) par rapport au transducteur (50, 75).

5. Dispositif suivant l'une quelconque des revendications 2 à 4, caractérisé par le fait que le transducteur (5, 30, 40, 50, 60, 75, 85) comporte des éléments piézoélectriques constitués sous la forme de barreaux courbes (26) en matériau piézoélectrique fixés sur la surface active (75a) du support du transducteur, suivant des génératrices de cette surface.

6. Dispositif suivant l'une quelconque des revendications 2 à 4, caractérisé par le fait que les éléments piézoélectriques (41, 48) sont constitués par des particules de petites dimensions ayant une disposition matricielle sur la surface active du support, suivant des génératrices courbes successives de la surface active, les éléments piézoélectriques (41, 48) étant reliés à des moyens d'excitation et de recueil de signaux à action séquentielle commandés de manière électronique, pour réaliser le balayage de la paroi du tube dans la direction circonférentielle et dans la direction longitudinale du tube.

7. Dispositif suivant l'une quelconque des revendications 2 à 6, caractérisé par le fait que le transducteur (60) comporte un faible nombre d'éléments piézoélectriques (65) disposés dans une zone périphérique de faible étendue de la surface active du support du transducteur.

8. Dispositif suivant la revendication 7, caractérisé par le fait que le transducteur (60) comporte trois éléments piézoélectriques pour réaliser le contrôle et le balayage d'une zone de soudure (62) d'un tube roulé ou soudé (61).

9. Dispositif suivant l'une des revendications 1 ou 2, caractérisé par le fait que les éléments piézoélectriques (41, 48) sont constitués sous la forme de particules de petites dimensions ayant une disposition matricielle sur la surface active du transducteur (40, 47), les éléments piézoélectriques (41, 48) étant alignés avec un certain espacement suivant les lignes courbes axiales successives de la surface active du support du transducteur (40, 47) et étant reliés à des moyens électroniques d'excitation séquentielle permettant de réaliser un balayage de la paroi du tube dans la direction circonférentielle, dans la direction longitudinale et suivant la direction radiale, c'est-à-dire suivant l'épaisseur du tube (1).

10. Dispositif suivant l'une quelconque des revendications 2 à 9, caractérisé par le fait que le transducteur (5, 30, 40, 45, 47, 50, 60, 75, 85) comporte un nombre d'éléments piézoélectriques sur sa surface active compris entre trois et plusieurs centaines.

11. Dispositif suivant l'une quelconque des revendications 1 à 10, caractérisé par le fait que les positions angulaires des éléments piézoélectriques (26, 41, 46, 48, 53, 65) disposés successivement suivant la périphérie de la surface active du transducteur sont séparées par un angle au plus égal à 10°.

12. Dispositif suivant la revendication 11, caractérisé par le fait que les positions angulaires des éléments piézoélectriques (26, 41, 46, 48, 53, 65) disposés successivement suivant la périphérie de la surface active du transducteur sont séparées l'une de l'autre par un angle compris entre une valeur inférieure à 1° et 5°.

13. Dispositif suivant la revendication 2, dans le cas du contrôle d'un tube dont le diamètre intérieur est inférieur à 20 mm, caractérisé par le fait que le support (25) du transducteur est constitué par une pastille à surface latérale concave dont le diamètre est voisin de 10 mm et l'épaisseur voisine de 4 mm, les barreaux piézoélectriques (26) ayant une longueur voisine de 4 mm, une largeur comprise entre 0,3 et 0,4 mm dans la direction circonférentielle du support (25) et une épaisseur comprise entre 0,1 et 0,3 mm dans la direction radiale du support (25).

14. Dispositif suivant la revendication 13 pour le contrôle de tubes d'une longueur supérieure à 10 m, caractérisé par le fait que des moyens électroniques pour effectuer l'émission et la réception des signaux ainsi que le balayage électronique par multiplexage sont associés au transducteur de manière à être déplacés avec le transducteur à l'intérieur des tubes dont on effectue le contrôle.

15. Dispositif suivant la revendication 1, caractérisé par le fait que le support du transducteur (45, 47) comporte des génératrices courbes ayant une direction générale inclinée par rapport à l'axe de symétrie du support.

16. Dispositif suivant l'une quelconque des revendications 1 à 15, caractérisé par le fait que le support du transducteur (5, 35, 40, 45, 47, 50, 60, 75, 85) est réalisé en un matériau amortissant les ondes ultrasonores.

17. Dispositif suivant la revendication 1, caractérisé par le fait qu'il comporte un châssis ou boîtier (72, 82) monté mobile par rapport à l'élément de forme allongée (70, 80) sur lequel sont fixés un coffret électronique (76, 86) renfermant des moyens d'alimentation des éléments piézoélectriques du transducteur (75, 85) et des moyens de traitement des signaux de mesure provenant des éléments piézoélectriques et un réservoir de liquide de couplage (77, 87).

18. Dispositif suivant la revendication 17, caractérisé par le fait que le châssis ou boîtier (82) est déplacé à l'intérieur d'un élément creux (80) dont on effectue le contrôle, par un fluide circulant à l'intérieur de l'élément creux (80).

19. Dispositif suivant l'une des revendications 1 ou 18, dans le cas où l'élément (1, 61, 80) est un élément creux dans lequel circule un fluide, caractérisé par le fait que le couplage entre le transducteur (5, 30, 35, 40, 45, 47, 60, 85) et l'élément creux est réalisé par le fluide en circulation.

## Patentansprüche

1. Vorrichtung zur zerstörungsfreien Ultraschallprüfung von länglichen Elementen mit annähernd konstantem Querschnitt (1, 51, 61, 70. 80), mit einem Ultraschallwandler (5, 30, 40, 45, 47, 50 60, 75, 85), der einen Träger (25, 52, 64), der eine aktive Oberfläche (75a) hat, deren Form der Form der Oberfläche des länglichen Elements entspricht und die der Oberfläche des länglichen Elements während der Verschiebungen des Wandlers gegenüberliegend angeordnet ist, sowie eine Vielzahl piezoelektrischer Elemente (26, 41, 46, 48, 53, 65) aufweist, die auf der aktiven Oberfläche des Trägers an nebeneinanderliegenden Stellen befestigt sind, mit Mitteln (10, 15, 16) zur Verschiebung des Wandlers in der Längsrichtung des länglichen Elements, mit Mitteln (7, 8, 76, 86) zur elektrischen Erregung des Wandlers zur Aussendung von Ultraschallwellen in Richtung mindestens einer Oberfläche des länglichen Elements, die mit den piezoelektrischen Elementen verbunden sind und so gesteuert werden, daß sie eine aufeinanderfolgende Erregung erzeugen, um eine Bündelung und Abtastung in Umfangsrichtung in einer Ebene des länglichen Elements und/oder eine tiefgehende Bündelung in derselben Ebene zu erhalten, und mit Mitteln (20, 76, 86) zur Aufnahme und Analyse elektrischer Meßströme, die vom Wandler herkommen, dadurch gekennzeichnet, daß der Träger (25, 52, 64) des Wandlers (5, 30, 40, 45, 47, 50, 60, 75, 85) eine aktive, konkave Oberfläche aufweist, deren Schnitt in einer Ebene, die durch die Achse des Wandlers hindurchläuft, die mit der Längsachse des länglichen Elements (1, 51, 61, 70, 80) zusammenfällt, eine gekrümmte Linie ist, deren Einbuchtung dem länglichen Element zugewandt ist, und daß die piezolelektrischen Elemente längs der gekrümmten, axialen, aufeinanderfolgenden Linien der aktiven Oberfläche des Trägers des Wandlers derart angeordnet sind, daß sie eine Bündelung der Ultraschallwellen in der axialen Richtung gestatten, d. h. in Richtung der Achse des länglichen Elements.

2. Vorrichtung nach Anspruch 1, in dem Fall, in welchem die länglichen Elemente (1, 51, 61, 70, 80) rohrförmige Elemente sind, bei denen man die Wandung prüft, dadurch gekennzeichnet, daß der Träger (25, 52, 64) des Wandlers (5, 30, 40, 45, 47, 50, 60, 75, 85) eine rotationssymmetrische, aktive Oberfälche (75a) aufweist, die einer Oberfläche des rohrförmigen Elements während der Verschiebungen des Wandlers gegenüberliegend angeordnet ist, wobei die gekrümmten Linien die Erzeugenden der aktiven Rotationsfläche bilden, und wobei die piezoelektrischen Elemente (26, 41, 46, 48, 53, 65) längs der Erzeugenden der aktiven Oberfläche des Trägers in aufeinanderfolgenden Winkellagen, die voneinander um höchstens 20° entfernt sind, rund um die Achse der aktiven Oberfläche des Trägers festgelegt sind.

3. Vorrichtung nach Anspruch 2, dadurch gekennzeichnet, daß der Wandler (5, 30, 35, 40, 45, 47, 60, 85) Mitteln (10, 15, 16) für seine Translationsverschiebung in axialer Richtung im Inneren des rohrförmigen Elements (1, 51, 61, 80) zugeordnet ist.

4. Vorrichtung nach Anspruch 2, dadurch gekennzeichnet, daß der Träger (52) des Wandlers (50, 75) eine Ringform aufweist, wobei die piezoelektrischen Elemente (53) auf der innenliegenden Oberfläche auf gekrümmten Erzeugenden des ringförmigen Trägers (52) befestigt sind, die bei der Relativverschiebung in axialer Richtung (54) in Bezug auf den Wandler (50, 75) der Außenoberfläche des Rohres (51) gegenüberliegend angeordnet ist.

5. Vorrichtung nach irgendeinem der Ansprüche 2 bis 4, dadurch gekennzeichnet, daß der Wandler (5, 30, 40, 50, 60, 75, 85) piezoelektrische Elemente aufweist, die in Form von gekrümmten Gitterstäben (26) aus piezoelektrischem Material gebildet sind, die an der aktiven Oberfläche (75a) des Trägers des Wandlers entsprechend der Erzeugenden dieser Oberfläche befestigt sind.

6. Vorrichtung nach irgendeinem der Ansprüche 2 bis 4, dadurch gekennzeichnet, daß die piezoelektrichschen Elemente (41, 48) von Partikeln mit kleinen Abmessungen gebildet sind, die eine matrixartige Anordnung auf der aktiven Oberfläche des Trägers entsprechend aufeinanderfolgenden, gekrümmten Erzeugenden der aktiven Oberfläche aufweisen, wobei die piezoelektrischen Elemente (41, 48) mit Mitteln zur Erregung und Aufnahme von aufeinanderfolgend wirksamen Signalen verbunden sind, die elektronisch gesteuert sind, um die Abtastung der Wand des Rohres in Umfangsrichtung und in der Längsrichtung des Rohres durchzuführen.

7. Vorrichtung nach irgendeinem der Ansprüche 2 bis 6, dadurch gekennzeichnet, daß der Wandler (60) eine geringe Anzahl von piezoelektrischen Elementen (65) aufweist, die in einer Umfangszone mit geringer Erstreckung der aktiven Oberfläche des Trägers des Wandlers angeordnet sind.

8. Vorrichtung nach Anspruch 7, dadurch gekennzeichnet, daß der Wandler (60) drei piezoelektrische Elemente aufweist, um die Prüfung und Abtastung einer Schweißzone (62) eines gerollten oder geschweißten Rohres (61) durchzuführen.

9. Vorrichtung nach einem der Ansprüche 1 oder 2, dadurch gekennzeichnet, daß die piezoelektrischen Elemente (41, 48) in der Form von Partikeln mit kleinen Abmessungen, die eine matrixartige Anordnung aufweisen, auf der aktiven Oberfläche des Wandlers (40, 47) aufgebaut sind, wobei die piezoelektrischen Elemente (41, 48) mit einem gewissen Abstand längs der gekrümmten, axialen, aufeinanderfolgenden Linien der aktiven Oberfläche des Trägers des Wandlers (40, 47) ausgerichtet sind und mit elektronischen Mitteln zur aufeinanderfolgenden Erregung verbunden sind, die es gestatten, eine Abtastung der Wand des Rohres in der Umfangsrichtung, in der Längsrichtung und längs der Radialrichtung zu bewirken, d. h. längs der Dicke des Rohres (1).

10. Vorrichtung nach irgendeinem der Ansprüche 2 bis 9, dadurch gekennzeichnet, daß der Wandler (5, 30, 40, 45, 47, 50, 60, 75, 85) eine Anzahl piezoelektrischer Elemente auf der aktiven Oberfläche aufweist, die zwischen drei und mehreren hundert liegt.

11. Vorrichtung nach irgendeinem der Ansprüche 1 bis 10, dadurch gekennzeichnet, daß die Winkellagen der piezoelektrischen Elemente (26, 41, 46, 48, 53, 65), die aufeinanderfolgend längs des Umfangs der aktiven Oberfäche des Wandlers angeordnet sind, um einen Winkel, der höchstens gleich 10° ist, getrennt sind.

12. Vorrichtung nach Anspruch 11, dadurch gekennzeichnet, daß die Winkellagen der piezoelektrischen Elemente (26, 41, 46, 48, 53, 65), die aufeinanderfolgend längs des Umfangs der aktiven Oberfäche des Wandlers angeordnet sind, voneinander um einen Winkel getrennt sind, der zwischen einem Wert, der niedriger als 1° ist, und 5° liegt.

13. Vorrichtung nach Anspruch 2, im Fall der Prüfung eines Rohres, dessen Innendurchmesser kleiner ist als 20 mm, dadurch gekennzeichnet, daß der Träger (25) des Wandlers von einem Plättchen mit einer seitlichen, konkaven Fläche gebildet ist, dessen Durchmesser nahe 10 mm und dessen Dicke nahe 4 mm liegt, wobei die piezoelektrischen Stäbe (26) eine Länge nahe 4 mm, eine Breite zwischen 0,3 und 0,4 mm in Umfangsrichtung des Trägers (25) und eine Dicke aufweisen, die zwischen 0,1 und 0,3 mm in Radialrichtung des Trägers (25) liegt.

14. Vorrichtung nach Anspruch 13 für die Prüfung von Rohren mit einer Länge von mehr als 10 m, dadurch gekennzeichnet, daß die elektronischen Mittel zum Bewirken des Sendens und Empfanges von Signalen sowie der elektronischen Abtastung durch Multiplexbetrieb dem Wandler derart zugeordnet sind, daß sie zusammen mit dem Wandler im Inneren der Rohre verschoben werden, an denen man die Prüfung vornimmt.

15. Vorrichtung nach Anspruch 1, dadurch gekennzeichnet, daß der Träger des Wandlers (45, 47) gekrümmte Erzeugende aufweist, die eine in Bezug auf die Symmetrieachse des Trägers geneigte Hauptrichtung aufweisen.

16. Vorrichtung nach irgendeinem der Ansprüche 1 bis 15, dadurch gekennzeichnet, daß der Täger des Wandlers (5, 35, 40, 45, 47, 50, 60, 75, 85) aus einem Material hergestellt ist, das die Ultraschallwellen dämpft.

17. Vorrichtung nach Anspruch 1, dadurch gekennzeichnet, daß sie einen Rahmen oder ein Gehäuse (72, 82) aufweist, der bzw. das bezüglich des länglichen Elements (70, 80) beweglich angebracht ist, worauf ein elektronischer Schaltkasten (76, 86), der Mittel zur Speisung der piezoelektrischen Elemente des Wandlers (75, 85) und Mittel zur Behandlung von Meßsignalen, die von den piezoelektrischen Elementen herkommen, umfaßt, sowie ein Vorratsbehälter für Koppelungsflüssigkeit (77, 87) befestigt sind.

18. Vorrichtung nach Anspruch 17, dadurch gekennzeichnet, daß der Rahmen oder das Gehäuse (82) im Inneren eines hohlen Elements (80), an dem man die Prüfung vornimmt, durch ein Strömungsmittel verschoben wird, das im Inneren des hohlen Elements (80) umläuft.

19. Vorrichtung nach einem der Ansprüche 1 oder 18, in dem Fall, in welchem das Element (1, 61, 80) ein hohles Element ist, in dem ein Strömungsmittel umläuft, dadurch gekennzeichnet, daß die Koppelung zwischen dem Wandler (5, 30, 35, 40, 45, 47, 60, 85) und dem hohlen Element durch das in Umlauf befindliche Strömungsmittel bewirkt wird.

## Claims

1. Apparatus for non-destructive ultrasonic testing of elongated elements of substantially constant section (1, 51, 61, 70, 80) comprising an ultrasonic transducer (5, 30, 40, 45, 47, 50, 60, 75, 85) comprising a support (25, 52, 64) having an active surface (75a) the shape of which corresponds to the shape of the surface of the elongated element, placed opposite the surface of the elongated element during the movements of the transducer and a plurality of piezoelectric elements (26, 41, 46, 48, 53, 65) fixed to the active surface of the support in adjacent arrangements, means (10, 15, 16) for moving the transducer in the longitudinal direction of the elongated element, means (7, 8, 76, 86) for electrically exciting the transducer for the emission of ultrasound waves in the direction of at least one surface of the elongated element, connected to the piezoelectric elements and controlled so as to produce sequential excitation in order to obtain focussing and circumferential scanning in one plane of the elongated element and/or in-depth focussing in this same plane and means (20, 76, 86) for collecting and analysing electric measuring currents coming from the transducer, characterised in that the support (25, 52, 64) of the transducer (5, 30, 40, 45, 47, 50, 60, 75, 85) comprises a concave active surface the section of which, through a plane passing through the axis of the transducer coinciding with the longitudinal axis of the elongated element (1, 51, 61, 70, 80), is a curved line the concavity of which is directed towards the elongated element, the piezoelectric elements being arranged along successive axial curved lines on the active surface of the transducer support, so as to enable focussing of the ultrasound waves in the axial direction, i.e. in the direction of the axis of the elongated element.

2. Apparatus according to claim 1, where the elongated elements (1, 51, 61, 70, 80) are tubular elements the wall of which is being measured, characterised in that the support (25, 52, 64) of the transducer (5, 30, 40, 45, 47, 50, 60, 75, 85) comprises a symmetrical active surface (75a) of revolution placed opposite a surface of the tubular element during the movements of the transducer, the curved lines constituting the generatrices of the active surface of revolution and the piezoelectric elements (26, 41, 46, 48, 53, 65) being fixed along generatrices of the active surface of the support, in successive angular positions about the axis of the active surface of the support which are at most 20 degrees apart from one another.

3. Apparatus according to claim 2, characterised in that the transducer (5, 30, 35, 40, 45, 47, 60, 85) is associated with means (10, 15, 16) for translational movement thereof in the axial direction, inside the tubular element (1, 51, 61, 80).

4. Apparatus according to claim 2, characterised in that the support (52) of the transducer (50, 75) is annular in shape, the piezoelectric elements (53) being fixed to the inner surface with curved generatrices of the annular support (52) which is arranged opposite the outer surface of the tube (51), relatively displaced in the axial direction (54) relative to the transducer (50, 75).

5. Apparatus according to any one of claims 2 to 4, characterised in that the transducer (5, 30, 40, 50, 60, 75, 85) comprises piezoelectric elements in the form of curved bars (26) of piezoelectric material which are fixed to the active surface (75a) of the transducer support, along the generatrices of this surface.

6. Apparatus according to any one of claims 2 to 4, characterised in that the piezoelectric elements (41, 48) are made up of small particles having a matrix distribution on the active surface of the support, along successive curved generatrices of the active surface, the piezoelectric elements (41, 48) being connected to electronically controlled means for sequential excitation and collection of signals, in order to scan the wall of the tube in the circumferential direction and in the longitudinal direction of the tube.

7. Apparatus according to any one of claims 2 to 6, characterised in that the transducer (60) has a small number of piezoelectric elements (65) arranged in a small peripheral zone of the active surface of the transducer support.

8. Apparatus according to claim 7, characterised in that the transducer (60) comprises three piezoelectric elements for monitoring and scanning a weld zone (62) of a rolled or welded tube (61).

9. Apparatus according to one of claims 1 and 2, characterised in that the piezoelectric elements (41, 48) are in the form of small particles in a matrix distribution on the active surface of the transducer (40, 47), the piezoelectric elements (41, 48) being aligned at a certain spacing along successive axial curved lines of the active surface of the transducer support (40, 47) and being connected to electronic means for sequential excitation enabling the wall of the tube to be scanned in the circumferential direction, in the longitudinal direction and in the radial direction, i.e. through the thickness of the tube (1).

10. Apparatus according to any one of claims 2 to 9, characterised in that the transducer (5, 30, 40, 45, 47, 50, 60, 75, 85) comprises a number of piezoelectric elements on its active surface of between three and several hundred.

11. Apparatus according to any one of claims 1 to 10, characterised in that the angular positions of the piezoelectric elements (26, 41, 46, 48, 53, 65) arranged successively along the periphery of the active surface of the transducer are separated by an angle of not more than 10 degrees.

12. Apparatus according to claim 11, characterised in that the angular positions of the piezoelectric elements (26, 41, 46, 48, 53, 65) arranged successively along the periphery of the active surface of the transducer are separated from one another by an angle ranging from less than 1 degree to 5 degrees.

13. Apparatus according to claim 2, in the case of the measuring of a tube the internal diameter of which is less than 20 mm, characterised in that the support (25) of the transducer consists of a pad with a concave lateral surface the diameter of which is around 10 mm and which is about 4 mm thick, the piezoelectric bars (26) having a length of about 4 mm, a width of between 0.3 and 0.4 mm in the circumferential direction of the support (25) and a thickness of between 0.1 and 0.3 mm in the radial direction of the support (25).

14. Apparatus according to claim 13, for measuring tubes longer than 10 m, characterised in that electronic means for carrying out the emission and reception of the signals and the electronic scanning by multiplexing are associated with the transducer so as to be moved along with the transducer inside the tubes which are being measured.

15. Apparatus according to claim 1, characterised in that the support of the transducer (45, 47) has curved generatrices having a general direction which is inclined relative to the axis of symmetry of the support.

16. Apparatus according to any one of claims 1 to 15, characterised in that the support of the transducer (5, 35, 40, 45, 47, 50, 60, 75, 85) is made of a material which absorbs ultrasound waves.

17. Apparatus according to claim 1, characterised in that it comprises a chassis or housing (72, 82) mounted to be movable relative to the elongated element (70, 80) on which are fixed an electronic box (76, 86) containing supply means for the piezoelectric elements of the transducer (75, 85) and means for processing the measuring signals coming from the piezoelectric elements and a reservoir for coupling liquid (77, 87).

18. Apparatus according to claim 17, characterised in that the chassis or housing (82) is moved along inside a hollow element (80) which is being measured, by means of a fluid circulating inside the hollow element (80).

19. Apparatus according to one of claims 1 and 18, in which the element (1, 61, 80) is a hollow element in which a fluid circulates, characterised in that the coupling between the transducer (5, 30, 35, 40, 45, 47, 60, 85) and the hollow element is effected by the circulating fluid.
